**Europäisches Patentamt**

(19) **European Patent Office**

**Office européen des brevets**

(11) Veröffentlichungsnummer: **0 107 018 B1**

(12) **EUROPÄISCHE PATENTSCHRIFT**

(45) Veröffentlichungstag der Patentschrift:
08.01.86

(51) Int. Cl.⁴: **H 04 N 9/12**, H 04 N 3/10

(21) Anmeldenummer: 83109139.2

(22) Anmeldetag: 15.09.83

(54) **Flache Farbbild-Wiedergabevorrichtung.**

(30) Priorität: 28.09.82 DE 3235894

(43) Veröffentlichungstag der Anmeldung:
02.05.84 Patentblatt 84/18

(45) Bekanntmachung des Hinweises auf die Patenterteilung:
08.01.86 Patentblatt 86/2

(84) Benannte Vertragsstaaten:
AT CH DE FR GB IT LI NL SE

(56) Entgegenhaltungen:
DE - A - 2 742 555
US - A - 3 843 959

PROCEEDING OF THE S.I.D., Jahrgang 16, Nr. 2, 2.
Quartal 1975, Seiten 62-68, Los Angeles, US I. OHISHI et
al.: "An experimental real-time color-TV display with a
DC gas-discharge panel"

(73) Patentinhaber: Siemens Aktiengesellschaft, Berlin und
München Wittelsbacherplatz 2, D-8000 München 2 (DE)

(72) Erfinder: Geffcken, Walter, Dipl.-Ing., Hogenbergplatz 3,
D-8000 München 21 (DE)
Erfinder: Littwin, Burkhard, Dipl.-Phys, Straubstrasse 2,
D-8021 Hohenschäftlarn (DE)

## Beschreibung

Die Erfindung bezieht sich auf eine Bildwiedergabevorrichtung gemäss dem Obergegriff des Anspruchs 1. Eine solche Bildwiedergabevorrichtung wird in der DE-A-27 42 555 beschrieben.

Mit zunehmender Bildpunktdichte wird es immer schwieriger, die im Inneren des Displays untergebrachten Steuerelemente fehlerfrei zu halten. Das gilt in erster Linie für Bildschirme bei denen man Elektronen aus einem rückwärtigen Raum durch selektiv geöffnete Löcher einer Steuerstruktur nach vorne zieht und anschliessend auf einen Leuchtschirm führt. Besonders kritisch ist es hierbei, die Lochmatrix der Steuereinheit, die nicht selten mehrere Elektrodenebenen und isolierende Zwischenwände umfasst, an jeder Stelle so sauber auszuführen, dass auf dem gesamten Anzeigefeld praktisch die gleichen geometrischen und elektrischen Verhältnisse herrschen.

Wegen dieser technologischen Probleme hat man bereits daran gedacht, in das Steuerteil ein relativ grobes Öffnungsraster einzubringen und die erforderliche Feinauflösung durch eine Nachablenkung der durch die Elektrodenmatrix geschleusten Elektronen zustande zu bringen.

Wenn mit einer solchen Hybridtechnik bunte Bilder auf der Basis dreier Grundfarben dargestellt werden sollen, so empfiehlt es sich, einen Elektronenstrahl pro Weisspunkt zu erzeugen und diesem Strahl die drei Farbkomponenten des Weisspunkts abtasten zu lassen. Hierzu sieht die DE-A-27 42 555 folgenden Aufbau vor: Jeder Spalte der Elektrodenmatrix sind jeweils zwei Ablenkelektroden nachgeordnet; die Information wird zeilensequentiell eingeschrieben, und zwar so, dass während der Ansteuerung einer Zeile die drei Farbauszüge der kompletten Zeileninformation nacheinander auf sämtliche Spalten gegeben werden; die Ablenkelektrodenpaare werden taktsynchron mit dem Farbwechsel auf Potentiale gelegt, mit denen sie die durchtretenden Elektronenstrahlen erst zur einen Seite ablenken, dann in gerader Richtung passieren lassen und schliesslich zur anderen Seite ablenken; die von den Elektronenstrahlen getroffenen Phosphorstreifen sind auf dem Leuchtschirm mit einer üblichen Farbenfolge, also etwa rot-grün-blau, verteilt. Zweifellos lässt sich auf diesem Wege das Auflösungsvermögen verbessern. Erste Versuche haben jedoch gezeigt, dass auch die Herstellung des Ablenksystems nicht ganz einfach ist; man muss vor allem darauf achten, dass es zwischen nebeneinanderliegenden Elektrodenpaaren nicht zu Überschlägen kommt.

Die Kurzschlussgefahr ist geringer, wenn man zwischen die Spalten jeweils nur eine Ablenkelektrode positioniert und aufeinanderfolgende Elektroden abwechselnd mit einer ersten bzw. zweiten Spannungsquelle verbindet. In diesem Fall werden allerdings benachbarte Elektronenstrahlen gegenläufig ausgelenkt, mit dem Resultat, dass man auch die Farbenfolge auf dem Leuchtschirm entsprechend — also etwa nach dem Schema rot-grün-blau-blau-grün-rot — kommutieren muss, wenn man das Display in üblicher Weise ansteuern will. Eine solche ungleichmässige Farbverteilung ist allerdings aus physiologischen Gründen nicht optimal; und unter ungünstigen Bedingungen wird der Betrachter ein streifiges Übermuster wahrnehmen.

Der Erfindung liegt daher die Aufgabe zugrunde, ein Display im Rahmen des geschilderten Hybridkonzepts so weiter zu entwickeln, dass es sowohl über eine einfache Nachablenkung wie auch über eine optimale Farbenfolge verfügt und ohne sonderlichen Aufwand angesteuert wird.

Zur Lösung dieser Aufgabe wird erfindungsgemäss eine Anzeigevorrichtung mit den Merkmalen des Patentanspruchs 1 vorgeschlagen.

Der Lösungsvorschlag beruht auf dem Befund, dass man bei gegenläufiger Strahlablenkung durchaus an dem gewohnten Farbmuster festhalten kann, denn die Anforderungen an die Signalverarbeitung sind im Grunde so beschaffen, dass sie sich mit einfachen Schaltmitteln bewältigen lassen. So kann man etwa bei der in Anspruch 2 gekennzeichneten Ausführung mit zwei Multiplexern durchwegs auf handelsübliche Bausteine zurückgreifen.

Die Erfindung soll nun anhand eines bevorzugten Ausführungsbeispiels in Verbindung mit der beigefügten Zeichnung näher erläutert werden. Es zeigen:

Fig. 1 von dem Ausführungsbeispiel die Hülle einschliesslich der darin untergebrachten Teile, in einer teilweise weggebrochenen Perspektivansicht;

Fig. 2 von dem Ausführungsbeispiel die Ansteuereinheit, soweit sie die Spaltenleiter und die Ablenkelektroden betrifft, in einem Blockschaltbild;

Fig. 3 und 4 ein Impulsdiagramm der in Fig. 2 dargestellten Ansteuerteile.

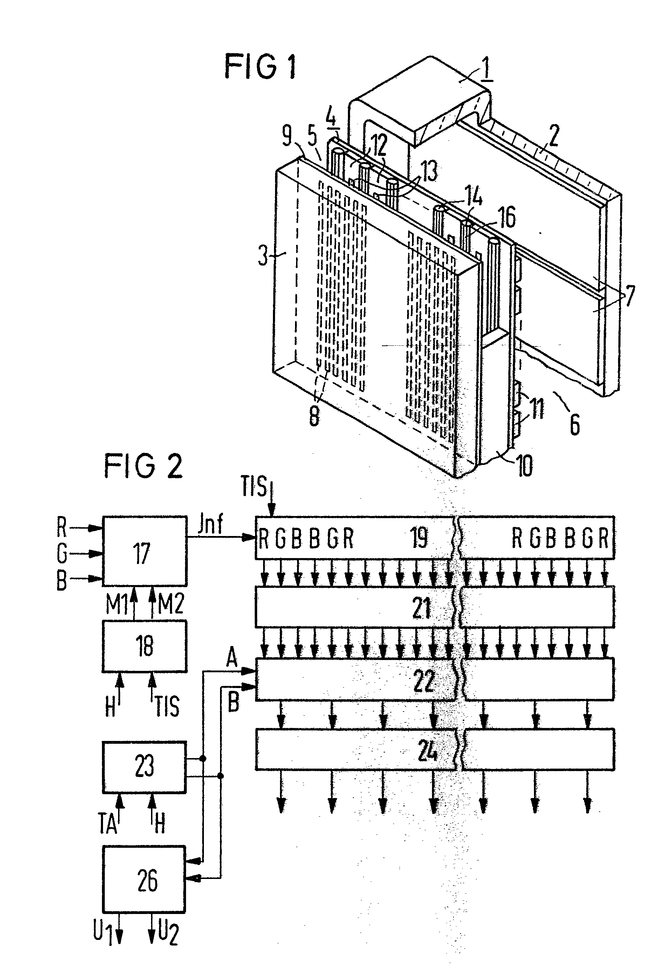

Der in der Fig. 1 mit seinen wesentlichen Teilen eingezeichnete Flachbildschirm dient zur Wiedergabe farbiger Fernsehbilder. Er enthält im einzelnen eine gasgefüllte Hülle 1 mit einer Rückplatte 2, einer Frontplatte 3 und einer Steuerplatte 4. Alle drei Teile erstrecken sich in zueinander parallelen Ebenen, wobei die Steuerstruktur das Hülleninnere in zwei Kammern, einen vorderen Nachbeschleunigungsraum 5 und einen hinteren Gasentladungsraum 6, unterteilt.

Die Rückplatte 2 ist auf ihrer Vorderseite mit einer Schar von zueinander parallelen, relativ grossflächigen Kathodenstreifen 7 versehen. Die Frontplatte 3 trägt auf ihrer Rückseite ein regelmässiges Raster aus Phosphorstreifen 8 und darüber eine Nachbeschleunigungsanode 9. Die Phosphorstreifen, die durch Elektronen zur Lichtabgabe angeregt werden können, emitieren in den Farben rot (R), grün (G) und blau (B). Sie sind auf dem Bildschirm mit einer periodischen Farbfolge verteilt — eine Periode umfasst drei Streifen mit der Reihenfolge R-G-B.

Die Steuerplatte 4, die gegen die Frontplatte durch einen Abstandsrahmen 10 abgestützt ist, hat folgenden Aufbau: Ein Träger aus isolierendem Material ist auf seiner Rück- und Vorderseite jeweils mit einer Schar aus streifenförmigen, zueinander parallelen Leitern (Zeilenleiter 11 bzw. Spaltenleiter 12) versehen. Die Zeilenleiter verlaufen parallel zu den Kathodenstreifen 7, und die Spaltenleiter erstrecken sich senkrecht dazu. Träger und Leiter sind in den Kreuzungspunkten der Elektrodenmatrix durchbrochen, so dass sich Elektronendurchtrittsöffnungen 13 ergeben. Zwischen den Spaltenleitern 12 erstrecken sich Isolatorstäbe 14, die auf ihrer Vorderseite jeweils mit einer Ablenkelektrode 16 in Form eines aufmetallisierten Streifens versehen sind.

Im Betrieb der Röhre liegen an den einzelnen Elektroden folgende Spannungen. An den selektierten und nichtselektierten Kathodenstreifen $-200V$ bzw. $0V$; an den getasteten und nichtgetasteten Zeilenleitern $0V$ bzw. $-50V$; an den Spaltenleitern zwischen $-80V$ und $-30V$; an den Ablenkelektroden entweder $-100V$ oder an den geradzahligen $-150V$ und an den ungeradzahligen $-50V$ oder aber — ebenfalls in räumlichem Wechsel — $-50V$ bzw. $-150V$; und an der Nachbeschleunigungsanode $+4kV$. Die Zeilenleiter werden nacheinander getastet, das heisst, sukzessive auf die Spannung $0V$ angehoben. Die Kathodenspannungen sind mit der Zeilenabtastspannung derart synchronisiert, dass bei der Zeilenfortschaltung jeweils zwischen dem ausgewählten Zeilenleiter und dem gerade gegenüber liegenden Kathodenstreifen ein Plasma brennt. Die Spaltenleiter erhalten während der Zeit, in der ein bestimmter Zeilenleiter angesteuert ist, nacheinander alle drei Farbkomponenten der zugehörigen Weisspunktinformation, und zwar mit einer von Spaltenleiter zu Spaltenleiter vertauschten Folge. Und die Spannungen für die Ablenkelektroden werden im Takt des Farbenwechsels verändert.

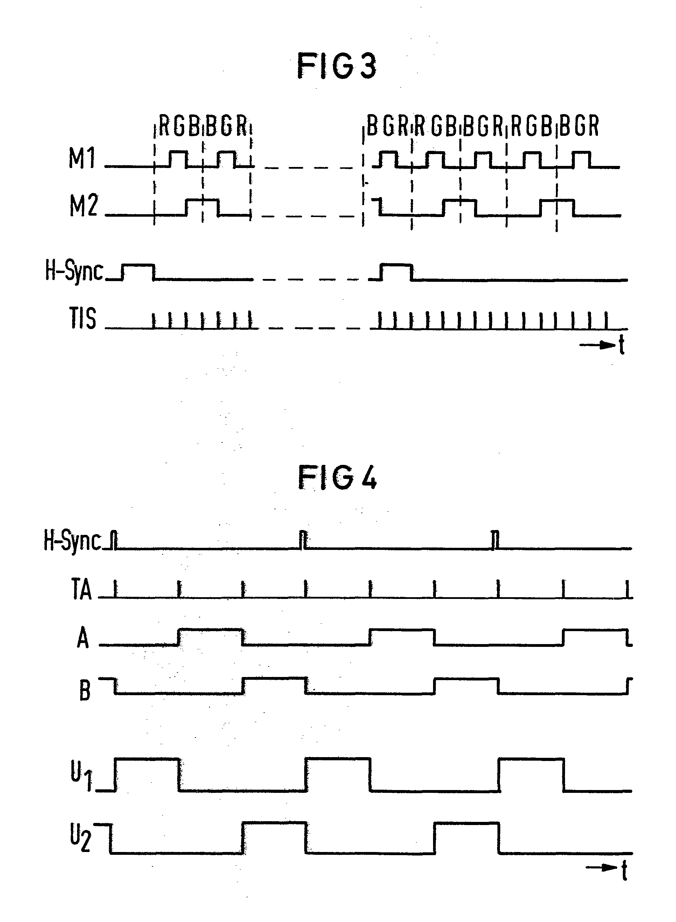

Die erforderliche Ansteuerschaltung ist an sich bekannt, soweit es sich um die Zeilen- und Kathodenfortschaltung handelt. Neu dagegen ist die Art der Informationsverarbeitung und die damit synchronisierte Steuerung der Ablenkelektroden. Wie dies für den Normalfall, bei dem die darzustellende Information auf je einer Leitung für Rot, Grün und Blau parallel anliegt, geschehen kann, zeigt das Beispiel der Figuren 2 bis 4. Ein Multiplexer 17 mit dazugehörigem Zähler 18 wandelt die parallele Information in eine serielle um. Die einzelnen Signale sind dabei so ineinandergeschachtelt, dass Informationen für benachbarte Weisspunkte aufeinanderfolgen und dabei die Reihenfolge der drei Farbsignale einer jeden Weisspunktinformation von Tripel zu Tripel umgekehrt wird. Der Zähler 18 erhält den Zeilenfortschaltimpuls „H-Sync" sowie den Impuls „TIS" (Fig. 3). Die Folgefrequenz des Impulses TIS beträgt das $3N$-Fache des H-Sync-Impulses ($N$=Anzahl der Spaltenleiter). Aus diesen Impulsen formt der Zähler 18 zwei Selektionsimpulse M1 und M2, mit denen er die Schaltstellungen des Multiplexers 17 steuert. Die serielle Zeileninformation wird in ein Schieberegister 19 geschoben und dann von einem Anzeigeregister 21 parallel übernommen. Ein weiterer Multiplexer 22 mit angeschlossenem Zähler 23 wählt aus der im Anzeigeregister 21 stehenden Information die erste, zweite und dritte Farbkomponente eines jeden Weisspunkts. Der zugeordnete Zähler 23 erhält ausser dem Impuls H-Sync den Impuls „TA", dessen Takt dreimal so gross ist wie die Zeilenfortschaltfrequenz (Fig. 4). Aus diesen Impulsen bildet der Zähler 23 Selektionsimpulse A und B zum Schalten des Multiplexers 22. Die von diesem Multiplexer abgegebenen Informationen werden dann über eine Endstufe 24 auf die einzelnen Spaltenleiter geführt. Die Selektionssignale A und B steuern ausser dem Multiplexer 22 auch noch — über eine Endstufe 26 — die Ablenkelektroden 13, von denen die ungeradzahligen und die geradzahligen jeweils mit einem Ausgang der Endstufe 26 verbunden sind. Die an den beiden Ausgängen liegenden Potentiale $U_1$, $U_2$ sind in dem Diagramm der Fig. 4 eingetragen.

Die Erfindung ist nicht auf das dargestellte Ausführungsbeispiel beschränkt, denn es geht im vorliegenden Fall im wesentlichen nur darum, beim Übergang von einer gleichsinnigen zu einer gegensinnigen Strahlablenkung nicht etwa die Farbpunkte auf dem Leuchtschirm umzuordnen, sondern die Schaltung anzupassen. So könnte man etwa die erforderlichen Vertauschungsoperationen durch den zweiten statt den ersten Multiplexer vornehmen lassen. Davon abgesehen bleibt auch in konstruktiver Hinsicht noch ein erheblicher Spielraum. Beispielsweise ist es ohne Belang, ob die Elektronen durch eine Gasentladung oder auf andere Weise erzeugt werden. Und schliesslich kommt es auch auf die Ausbildung der Ablenkelektroden selbst nicht entscheidend an. Die Ablenkelektroden könnten auch aus gespannten Drähten bestehen und/oder gegenüber den Steuerleitungen vorgezogen sein, etwa in Form von Streifen, die in einer Schichttechnik auf die Vorderseite einer weiteren Lochplatte aufgebracht sind und in die Löcher hineinreichen.

**Patentansprüche**

1. Flache Bildwiedergabevorrichtung zur Darstellung farbiger Bilder auf der Basis dreier Grundfarben, enthaltend

1a) eine vakuumdichte Hülle (1) mit

b) einer Elektrodenmatrix, die aus Zeilenleitern (11) und den Zeilenleitern vorgelagerten Spaltenleitern (12) besteht, an ihren Kreuzungspunkten (13) durchbrochen ist und das Hülleninnere in eine hintere (6) und eine vordere (5) Kammer teilt,

c) einer flächigen Elektronenquelle (7) in der hinteren Kammer (6),

d) langgestreckten, in der vorderen Kammer (5) befindlichen Ablenkelektroden (16) zwischen benachbarten Spaltenleitern (12), wobei die ungeradzahligen Ablenkelektroden auf eine erste und die geradzahligen auf eine zweite Spannungsquelle geführt sind, und mit

e) streifenförmigen, auf der frontseitigen Hüllenwand angebrachten Lumineszenzstreifen (8), die bei einer Elektronenanregung in jeweils einer der drei Grundfarben lumineszieren und in einer Farbfolge mit einer aus den drei Grundfarben (R,G,B) gebildeten Periode spaltenleiterparallel nebeneinander liegen;

2a) eine Ansteuerschaltung, die

b) die Zeilenleiter (11) nacheinander abtastet,

c) die Spaltenleiter (12) während jeder Zeilenabtastzeit jeweils mit den zugehörigen Weisspunkt-Informationssignalen, und zwar farbenweise nacheinander, versieht, derart, dass die von der Elektronenquelle (7) gelieferten Elektronen selektiv Durchbrüche (13) der Elektrodenmatrix passieren können, und

d) die Ablenkelektroden (16) im Takt des Farbwechsels auf unterschiedliche Potentiale legt, derart, dass die in die vordere Kammer (5) eintretenden Elektronen auf die jeweils farbrichtigen Lumineszenzstreifen (8) gelenkt werden; dadurch gekennzeichnet, dass

1f) zwischen benachbarten Spaltenleitern (12) jeweils nur eine Ablenkelektrode (16) vorgesehen ist;

2e) ein erster Multiplexer (17) die farbenweise parallel gelieferte Information seriell in ein Schieberegister (19) eingibt, wobei die Informationssignale benachbarter Weisspunkte aufeinander folgen,

f) die Information einer ganzen Zeile parallel von einem Anzeigeregister (21) übernommen wird und

g) ein zweiter Multiplexer (22) aus dem Anzeigeregister (21) von allen Weisspunkt-Informationssignalen nacheinander die drei Farbinformationssignale entnimmt und sie über eine Endstufe (24) auf die jeweils zugehörigen Spaltenleiter (12) führt, wobei

h) benachbarte Spaltenleiter (12) die Farbinformationssignale jeweils in umgekehrter Reihenfolge erhalten.

2. Vorrichtung nach Anspruch 1, dadurch gekennzeichnet, dass der erste Multiplexer (17) innerhalb aufeinanderfolgender Weisspunkt-Informationssignale die Folge der Farbinformationssignale vertauscht und der zweite Multiplexer (22) dem Anzeigeregister (21) die Farbinformationssignale nacheinander vom jeweils (3n+1)-ten, (3n+2)-ten und vom (3n+3)-ten Speicherplatz entnimmt (n=0,...N−1, mit N=Anzahl der Spaltenleiter).

3. Vorrichtung nach Anspruch 2, dadurch gekennzeichnet, dass zu dem ersten Multiplexer (17) ein erster Zähler (18) gehört, der den Zeilenfortschaltimpuls (H-Sync) sowie einen Taktimpuls (TIS), der mit dem Zeilenfortschaltimpuls synchronisiert ist und eine 3Nmal so hohe Folgefrequenz wie der Zeilenfortschaltimpuls hat (N=Anzahl der Spaltenleiter), empfängt und den Multiplexer (17) über zwei Selektionsimpulse (M1, M2) entsprechend seinem Taktimpuls (TIS) schaltet, und dass zu dem zweiten Multiplexer (22) ebenfalls ein Zähler (23) gehört, der neben dem Zeilenfortschaltimpuls (H-Sync) einen synchronisierten Taktimpuls (TA) mit dreifacher Folgefrequenz erhält und den zweiten Multiplexer (22) über zwei Selektionsimpulse (A, B) entsprechend seinem Taktimpuls (TA) schaltet.

4. Vorrichtung nach Anspruch 3, dadurch gekennzeichnet, dass die Taktimpulse (A, B) des zweiten Zählers (23) zugleich auch über eine weitere Endstufe (26) die Ablenkelektroden (16) schalten.

## Claims

1. A flat image display device for representing coloured images on the basis of three basic colours, including:

1a) a vacuum-tight sleeve (1) with

b) an electrode matrix which comprises row conductors (11) and column conductors (12) spaced from the row conductors, is perforated at its cross-points (13) and divides the interior of the sleeve into a rear (6) and a front (5) chamber,

c) a two-dimensional electron source (7) in the rear chamber (6),

d) elongate deflector electrodes (16) arranged in the front chamber (5) between adjacent column conductors (12), where the odd-numbered deflector electrodes lead to a first voltage source and the even-numbered deflector electrodes lead to a second voltage source, and with

e) strip-shaped luminescence strips (8) which are arranged on the front sleeve wall and which, when excited by electrons, become luminescent in one of the three basic colours and are arranged column-conductor-parallel beside one another in a colour sequence with a cycle formed from the three basic colours (R, G, B);

2a) a drive circuit which

b) scans the row conductors (11) consecutively,

c) during each row scanning time provides the column conductors (12) with the associated illuminant information signals, consecutively in terms of colour, in such manner that the electrons supplied by the electron source (7) can selectively pass through openings (13) in the electrode matrix, and

d) connects the deflector electrodes (16) in the timing of the colour change to different potentials in such manner that the electrons which enter the front chamber (5) are deflected towards the correct colour luminescence strips (8), characterized in that

1e) only one deflector electrode (16) is arranged between adjacent column conductors (12);

2e) a first multiplexer (17) series-inputs the information, which has been supplied in parallel in terms of colour, into a shift register (19), whereby the information signals of adjacent illuminants follow one another,

f) the information of one entire row is received in parallel by a display register (21) and

g) a second multiplexer (22) consecutively obtains the three colour information signals from all the illuminent information signals from the display register (21) which it transfers via an end stage (24) to the associated column conductor (12), where

h) adjacent column conductors (12) obtain the colour information signals in reverse sequence.

2. A device as claimed in claim 1, characterized in that the first multiplexer (17) exchanges the sequence of the colour information signals within consecutive illuminant information signals, and the second multiplexer (22) consecutively obtains from the display register (21) the colour information signals from the (3n+1)th, (3n+2)th and (3n+3)th storage positions (n=0,...N−1, where N = the number of the column conductors).

3. A device as claimed in claim 2, characterized in that the first multiplexer (17) comprises a first counter (18) which receives the row step-on pulse (H-Sync) and a clock pulse (TIS) which is synchronised with the row step-on pulse and has a repetition frequency which is 3N times that of the row step-on pulse (N = number of the column conductors), and which switches the multiplexer (17) via two selection pulses (M1, M2) in accordance with its clock pulse (TIS), and that the second multiplexer (22) likewise comprises a counter (23) which, in addition to the row step-on pulse (H-Sync), receives a synchronised clock pulse (TA) having three times the repetition frequency and which switches the second multiplexer (22) via two selection pulses (A, B) in accordance with its clock pulse (TA).

4. A device as claimed in claim 3, characterized in that the clock pulses (A, B) of the second counter (23) simultaneously switch the deflector electrodes (16) via a further end stage (26).


## Revendications

1. Appareil plat de reproduction d'images servant à représenter des images en couleurs sur la base de trois couleurs fondamentales, incluant

1a) une enceinte étanche au vide (1), avec

b) une matrice d'électrodes, qui est constituee par des conducteurs de ligne (11) dans des conducteurs de colonne (12) disposés en avant des conducteurs de ligne et est perforée au niveau de leurs points d'intersection (13), et l'intérieur de l'enceinte est subdivisée en une chambre arrière (6) et une chambre avant (5),

c) une source d'électrons (7) présentant une certaine étendue et située dans la chambre arrière (6),

d) des électrodes allongées de déviation (16), situées dans la chambre avant (5) entre des conducteurs de colonne voisins (12), les électrodes de déviation impaires étant reliées à une première source de tension et les électrodes de déviation paires étant reliées à une seconde source de tension, et comportant

d) des bandes de substance luminescente (8) en forme de bandes, disposées sur la paroi avant de l'enceinte et qui, lors d'une excitation par des électrons, fournissent une luminescence respectivement dans l'une des trois couleurs fondamentales et sont disposées côte à côte parallèlement aux conducteurs de colonne conformément à une succession des couleurs dont la période est formée par les trois couleurs fondamentales (R, G, B);

2a) un circuit de commande, qui

b) explore successivement les conducteurs de ligne (11),

c) attribue, successivement couleur par couleur, respectivement les signaux associés d'information de point blanc, de telle sorte que les électrons délivrés par la source d'électrons (7) peuvent traverser sélectivement des perçages (13) de la matrice d'électrodes, et

d) place les électrodes de déviation (16) à des potentiels différents à la cadence du changement de couleur de telle sorte que les électrons pénétrant dans la chambre avant (5) sont déviés vers les bandes de substance luminescente (8) possédant respectivement les couleurs correctes; caractérisé par le fait que

1e) respectivement une seule électrode de déviation (16) est prévue entre des conducteurs de colonne voisins (12);

2e) un premier multiplexeur (17) introduit de façon séquentielle l'information, délivrée en parallèle conformément aux couleurs, dans un registre à décalage (19), les signaux d'information de point blanc voisins se succédant les uns aux autres;

f) l'information de l'ensemble d'une ligne est prise en charge en parallèle par un registre d'affichage (21), et

g) un second multiplexeur (22) prélève successivement les trois signaux d'information de couleurs à partir du registre d'affichage (21) de tous les signaux d'information de points blancs et les envoie, par l'intermédiaire d'un étage final (24) aux conducteurs de colonne respectivement associés (12),

h) les conducteurs de colonne voisins (12) recevant les signaux d'information de couleurs respectivement selon la succession inverse.

2. Dispositif suivant la revendication 1, caractérisé par le fait que le premier multiplexeur (17) permute la suite des signaux d'information de couleurs à l'intérieur de signaux successifs d'information de points blancs et que le second multiplexeur (22) prélève successivement, dans le registre d'affichage (21), les signaux d'information de couleurs situés respectivement aux (3n+1)−ème, (3n+2)−ème et (3n+3)−ème cases de mémoire (n=0,..., N−1, N représentant le nombre des conducteurs de colonne).

3. Dispositif suivant la revendication 2, caractérisé par le fait que le premier multiplexeur (17) inclut un premier compteur (18) qui reçoit l'impulsion d'avance de ligne (H-Sync) ainsi qu'une impulsion de cadence (TIS) qui est synchronisée avec l'impulsion d'avance de ligne et possède une fréquence de récurrence égale à 3N fois la fréquence des impulsions d'avance de lignes (N=nombre des conducteurs de colonne), et qui commute le multiplexeur (17) par l'intermédiaire de deux impulsions de sélection (M1, M2), conformément à son impulsion de cadence (TIS), et que le second multiplexeur (22) contient également un compteur (23) qui reçoit, outre l'impulsion d'avance de lignes (H-Sync) une impulsion de cadence synchronisée (PA) possédant une fréquence de récurrence triple et commute le second

multiplexeur (22) par l'intermédiaire de deux impulsions de sélection (A, B) en fonction de son impulsion de cadence (TA).

4. Dispositif suivant la revendication 3, caractérisé par le fait que les impulsions de cadence (A, B) du second compteur (23) commutent également simultanément les électrodes de déviation (16), par l'intermédiaire d'un autre étage final (26).

# FIG 1

# FIG 2

# FIG 3

# FIG 4